# EUROPEAN PATENT APPLICATION

(11) **EP 4 258 434 A1**
(43) Date of publication of application: **11.10.2023**
(21) Application number: 23166061.4
(22) Date of filing: 31.03.2023
(51) Int. Cl.: H01M 50/107, H01M 50/109, H01M 50/152, H01M 50/148, H01M 50/167, H01M 50/169, H01M 50/179, H01M 50/188, H01M 50/529, H01M 50/531, H01M 50/545, H01M 50/548, H01M 50/559, H01M 50/566, H01M 50/153

(54) **CYLINDRICAL SECONDARY BATTERY**

(30) Priority: 06.04.2022 KR 20220042836
(71) Applicant: Samsung SDI Co., Ltd., Yongin-si, Gyeonggi-do 17084 (KR)
(72) Inventor: KIM, Myung Seob, 17084 Yongin-si (KR); KO, Sung Gwi, 17084 Yongin-si (KR); JUNG, Hyun Ki, 17084 Yongin-si (KR); LEE, Kyung Rok, 17084 Yongin-si (KR); LEE, Ho Jae, 17084 Yongin-si (KR); PARK, Gun Gue, 17084 Yongin-si (KR); PARK, Byung Chul, 17084 Yongin-si (KR)
(74) Representative: Marks & Clerk LLP

(57) **Abstract**

A cylindrical secondary battery includes: an electrode assembly including a positive electrode plate, a separator, and a negative electrode plate; a cylindrical can accommodating the electrode assembly, a lower end of the cylindrical can being electrically connected to the negative electrode plate; a terminal passing through a top surface of the cylindrical can and electrically connected to the positive electrode plate; and a cap plate coupled at the lower end of the cylindrical can. The cap plate is sealed to the lower end of the cylindrical can by welding.

## Description

### BACKGROUND

### 1. Field

Aspects of embodiments of the present disclosure relate to a cylindrical secondary battery.

### 2. Description of the Related Art

Generally, a cylindrical secondary battery includes a cylindrical electrode assembly, a cylindrical can accommodating the electrode assembly and an electrolyte, and a cap assembly coupled to an opening at an upper end of the can to seal the can and to allow electrical connection between the electrode assembly and an external device or circuit.

The cylindrical secondary battery generally has a structure in which a can having negative polarity (e.g., acting as a negative electrode) and a cap assembly having positive polarity (e.g., acting as a positive electrode) are insulated from each other by a gasket. In the case of a battery module including a plurality of cylindrical secondary batteries that are connected to each other, bus bars have to be connected to upper and lower portions (or ends) of the secondary batteries, complicating the structure and increasing processing time.

The above-described information provides a brief background of the present disclosure and is for improving the understanding of the background of the present disclosure. Thus, it may include information that does not constitute the related or prior art.

### SUMMARY

Embodiments of the present disclosure provide a cylindrical secondary battery in which both a positive electrode and a negative electrode are provided at one end thereof such that, when a plurality of secondary batteries are electrically connected to each other via a bus bar, the secondary batteries are connected to each other at only one surface to simplify a connection structure of the bus bar.

Embodiments of the present disclosure also provide a cylindrical secondary battery, in which, because a cap plate and a cylindrical can are sealed to each other by welding, a separate gasket for sealing may be omitted to reduce an overall height of the battery, thereby increasing a capacity to height ratio.

According to an embodiment of the present disclosure, a cylindrical secondary battery includes: an electrode assembly including a positive electrode plate, a separator, and a negative electrode plate; a cylindrical can accommodating the electrode assembly, a lower end of the cylindrical can being electrically connected to the negative electrode plate; a terminal passing through a top surface of the cylindrical can and electrically connected to the positive electrode plate; and a cap plate coupled at the lower end of the cylindrical can, the cap plate being sealed to the lower end of the cylindrical can by welding.

The cylindrical can may have a top surface portion and a side surface portion extending downwardly from an edge of the top surface portion, and the top surface portion may have a flat plate shape and a terminal hole passing through a central portion thereof.

The terminal may be coupled at the terminal hole and may have an upper end exposed to the outside, and a gasket may be interposed between the cap plate and the terminal.

The cylindrical secondary battery may further include a plate-shaped positive electrode collector plate in the cylindrical can and fixed and electrically connected by welding to the positive electrode plate exposed at an upper end of the electrode assembly, and a top surface of the positive electrode collector plate may be welded to a bottom surface of the terminal.

The cylindrical can may include: a beading part recessed into the cylindrical can at an upper portion thereof with respect to the cap plate; and a crimping part bent inwardly at a lower portion thereof with respect to the cap plate.

The cylindrical secondary battery may further include a negative electrode collector plate in the cylindrical can. The negative electrode collector plate may include: a planar part having a plate shape and being welded to a bottom surface of the electrode assembly; and an extension part extending downwardly from an edge of the planar part and being welded to the beading part of the cylindrical can.

The cylindrical secondary battery may further include a first welding part between an outer end of the extension part and the beading part, and the outer end of the extension part may be at a lower portion of the beading part.

An outer end of the cap plate may be between the beading part and the crimping part and may be welded to the cylindrical can and the negative electrode collector plate.

The cylindrical secondary battery may further include a second welding part electrically and mechanically coupling a surface of the cap plate and the extension part of the negative electrode collector plate.

The cylindrical secondary battery may further include: a third welding part electrically and mechanically coupling an outer surface of the beading part of the cylindrical can and the outer end of the cap plate; and a fourth welding part electrically and mechanically coupling a surface of the crimping part of the cylindrical can and an outer surface of the cap plate.

The third welding part may have a ring shape parallel to the beading part of the cylindrical can and may seal a gap between the cylindrical can and the cap plate.

The fourth welding part may have a ring shape along the crimping part of the cylindrical can and may seal a gap between the cylindrical can and the cap plate.

At least some of the above and other features of the invention are set out in the claims.

### BRIEF DESCRIPTION OF THE DRAWINGS

The accompanying drawings are included to provide a further understanding of the present disclosure and are incorporated in and constitute a part of this disclosure. The drawings illustrate embodiments of the present disclosure and, together with the description, explain aspects and features of the present disclosure. In the drawings:
FIG. 1 is a perspective view of a cylindrical secondary battery according to an embodiment;
FIG. 2 is a cross-sectional view of the cylindrical secondary battery shown in FIG. 1;
FIG. 3 is a bottom view of a cap plate attached to a cylindrical can in the cylindrical secondary battery shown in FIG. 1;
FIGS. 4A to 4C are partial enlarged cross-sectional views of a welding part before and after the cap plate is coupled to the cylindrical can in the cylindrical secondary battery shown in FIGS. 1 and 2; and
FIG. 5 is a bottom view of the cylindrical secondary battery shown in FIG. 1.

### DETAILED DESCRIPTION

Hereinafter, embodiments of the present disclosure will be described, in detail, with reference to the accompanying drawings. The present disclosure may, however, be embodied in many different forms and should not be construed as being limited to the embodiments set forth herein. Rather, these embodiments are provided so that those skilled in the art will thoroughly understand the present disclosure. In other words, these embodiments are provided so that this disclosure will be thorough and complete, and will fully convey the scope of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

Here, throughout the specification, parts having similar configurations and operations are denoted by the same reference numerals. Also, in this specification, when an element or part is referred to as being "electrically connected" to another portion, it should be understood that the former can be "directly connected" to the latter or "connected" to the latter via an intervening member.

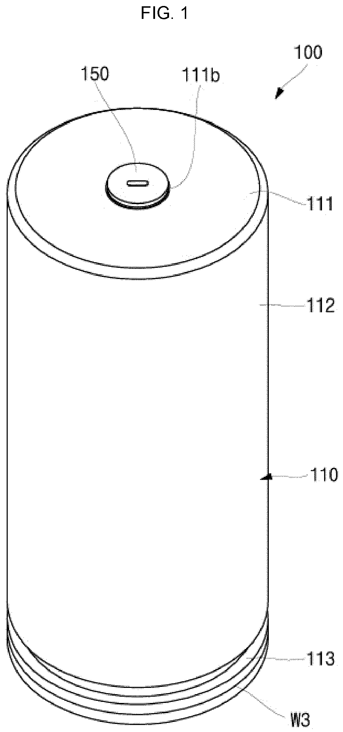

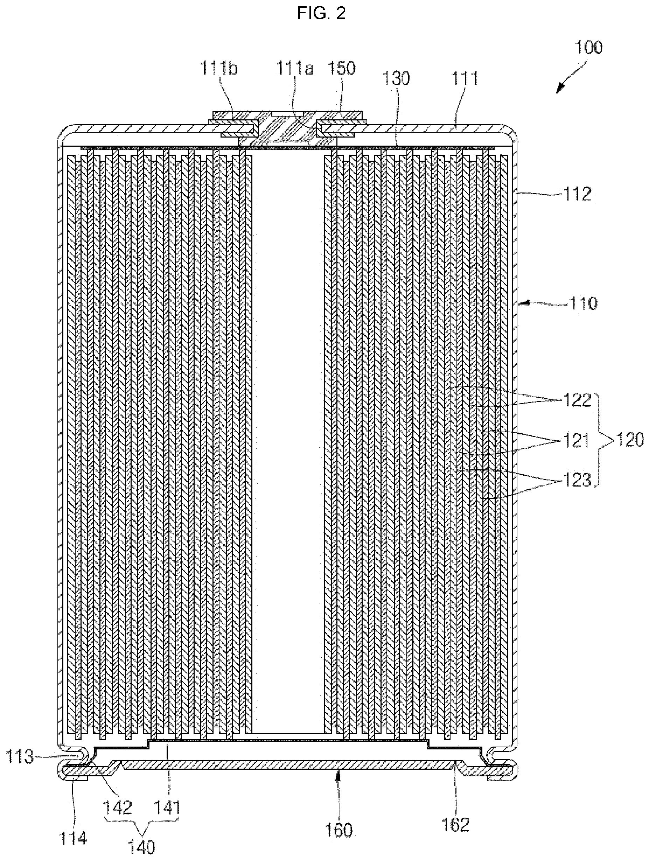

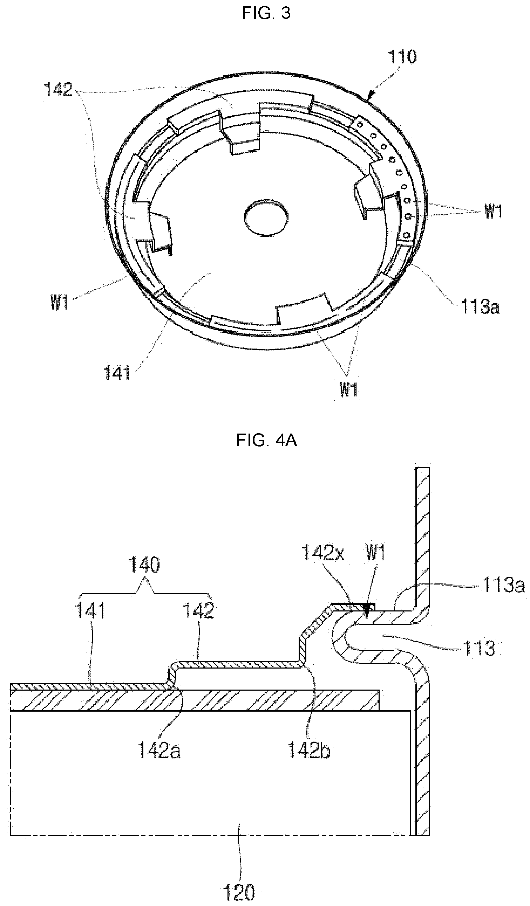

FIG. 1 is a perspective view illustrating a cylindrical secondary battery 100 according to an embodiment, FIG. 2 is a cross-sectional view of the cylindrical secondary battery 100 shown in FIG. 1, and FIG. 3 is a bottom view of a cap plate 160 before it is coupled to the cylindrical can 110.

As illustrated in FIGS. 1 to 3, the cylindrical secondary battery 100 according to an embodiment may include a cylindrical can 110, an electrode assembly 120 accommodated in the cylindrical can 110, a terminal 150 coupled to a terminal hole (e.g., a terminal opening) provided in one end of the cylindrical can 110, and a cap plate 160 sealing an opening at the other end (e.g., the opposite end) of the cylindrical can 110.

The cylindrical can 110 has a circular top surface portion 111 and a side surface portion 112 extending a length downwardly from an edge of the top surface portion 111. The top surface portion 111 and the side surface portion 112 of the cylindrical can 110 may be integrated (or integral) with each other.

The circular top surface portion 111 may have a flat circular plate shape and may have a terminal hole (e.g., a terminal opening) 111a passing through a central portion thereof. The terminal 150 may be coupled to the top surface portion 111 of the cylindrical can 110 by inserting the terminal 150 into the terminal hole 111a. A gasket 111b for sealing and electrical insulation may be further interposed between the terminal hole 111a and the terminal 150. The gasket 111b blocks (or prevents) contact between the terminal 150 and the cylindrical can 110 to electrically separate the terminal 150 and the cylindrical can 110 from each other. The terminal hole 111a in the top surface portion 111 of the cylindrical can 110 may be sealed by the gasket 111b. The gasket 111b may be made of a resin material, such as polyethylene (PE), polypropylene (PP), polyethylene terephthalate (PET), or the like.

A lower portion (or lower or bottom end) of the cylindrical can 110 is open (or opened) during a manufacturing process. Thus, during the process of manufacturing the cylindrical secondary battery 100, the electrode assembly 120 may be inserted through the opened lower portion of the cylindrical can 110 together with the electrolyte. The electrolyte and the electrode assembly 120 may be inserted into the cylindrical can 110 in a state in which the opened lower part faces upwardly (e.g., upwardly with respect to a gravitational direction). After the electrolyte and the electrode assembly 120 are inserted into the cylindrical can 110, the cap plate 160 may be coupled to the opened lower end of the cylindrical can 110 to seal the inside of the cylindrical can 110. The electrolyte enables movement of lithium ions between a positive electrode plate 121 and a negative electrode plate 122, which constitute the electrode assembly 120. The electrolyte may be a non-aqueous organic electrolyte that is a mixture of lithium salt and a high-purity organic solvent. Furthermore, the electrolyte may be a polymer using (or including) a polymer electrolyte or a solid electrolyte, but the type of the electrolyte is not limited.

The cylindrical can 110 may be made of steel, a steel alloy, aluminium, an aluminium alloy, or an equivalent thereof, but the material of the cylindrical can 110 is not limited thereto. In addition, in the cylindrical can 110, a beading part (e.g., a bead) 113, which is a portion of the cylindrical can 110 that is recessed inwardly, may be provided at an upper portion of the cylindrical can 110 with respect to the cap plate 160 (e.g., may be provided above the cap plate 160) to prevent the cap assembly 160 from being separated from the cylindrical can 110, and a crimping part 114, which is a portion of the cylindrical can 110 that is bent inwardly, may be provided at a lower portion of the cylindrical can 110.

After the electrode assembly 120 is inserted through the opened lower end of the cylindrical can 110, the beading part 113 may prevent (or may be provided to prevent) the electrode assembly 120 from separating from the cylindrical can 110.

The electrode assembly 120 includes a positive electrode plate 121 coated with a positive electrode active material, a negative electrode plate 122 coated with a negative electrode active material, and a separator 123 interposed between the positive electrode plate 121 and the negative electrode plate 122 to prevent a short circuit from occurring between the positive electrode plate 121 and the negative electrode plate 122 while allowing the lithium ions to move therebetween. The positive electrode plate 121, the negative electrode plate 122, and the separator 123 are stacked, and then, the electrode assembly 120 is wound from a winding end in a substantially cylindrical shape. In addition, in the electrode assembly 120, a positive electrode non-coating portion that is not coated with the positive electrode active material may protrude upwardly from the positive electrode plate 121, and a negative electrode non-coating portion that is not coated with the negative electrode active material may protrude downwardly from the negative electrode plate 122.

In the positive electrode plate 121, at least one surface of a plate-shaped metal foil made of, for example, aluminium (Al) is applied to a positive electrode active material made of a transition metal oxide. In addition, the positive electrode plate 121 may be provided with the positive electrode non-coating portion, which is not coated with the positive electrode active material, at an upper portion thereof. The positive electrode non-coating portion may protrude toward an upper side of the electrode assembly 120. For example, the positive electrode non-coating portion of the positive electrode plate 121 may protrude more upwardly than (e.g., may protrude above) the negative electrode plate 122 and the separator 123.

The negative electrode plate 122 is coated with the negative electrode active material, such as graphite or carbon, on at least one surface of the plate-shaped metal foil made of, for example, copper (Cu) or nickel (Ni). In addition, the negative electrode plate 122 may be provided with the negative electrode non-coating portion, which is not coated with the negative electrode active material, at a lower portion thereof. The negative electrode non-coating portion may protrude toward a lower side of the electrode assembly 120. For example, the negative electrode non-coating portion of the negative electrode plate 122 may protrude more downwardly than (e.g., may protrude below) the positive electrode plate 121 and the separator 123.

The separator 123 may be made of polyethylene (PE) or polypropylene (PP), but the present disclosure is not limited thereto. The separator 123 may prevent an electrical short between the positive electrode plate 121 and the negative electrode plate 122 from occurring while allowing the lithium ions to move therebetween.

A positive electrode collector plate 130 may be a circular metal plate having a shape corresponding to the top surface of the electrode assembly 120. A planar size of the positive electrode collector plate 130 may be equal to or smaller than a top surface of the electrode assembly 120. The positive electrode collector plate 130 may be made of aluminium (Al). The positive electrode collector plate 130 may be fixed and electrically connected to the positive electrode plate 121, exposed at the upper side of the electrode assembly 120, by welding in a state in which the bottom surface of the positive electrode collector plate 130 is in contact with the top surface of the electrode assembly 120. The positive electrode collector plate 130 may be fixed and electrically connected to the terminal 150 by welding in a state in which the top surface of the positive electrode collector plate 130 is in contact with the bottom surface of the terminal 150. The positive electrode collector plate 130 acts as a passage for a current flow between the positive electrode plate 121 of the electrode assembly 120 and the terminal 150.

The negative electrode collector plate 140 may have a circular planar part 141 corresponding to the bottom surface of the electrode assembly 120 and an extension part 142 extending downwardly from an edge of the planar part 141. A top surface of the planar part 141 may be in contact with the bottom surface of the electrode assembly 120. The top surface of the planar part 141 may be fixed and electrically connected to the negative electrode plate 122 exposed at the lower side of the electrode assembly 120 by welding in a state of being in contact with the bottom surface of the electrode assembly 120.

The extension part 142 may be provided in plural and spaced apart from each other along an edge of the planar part 141. As an example, FIG. 3 is a bottom perspective view of the negative electrode collector plate 140 seated on a lower inner surface 113a of the beading part 113 after the beading part 113 of the cylindrical can 110 is formed. In the embodiment shown in FIG. 3, the extension part 142 includes four parts that are symmetrical to each other with respect to the planar part 141 but is not limited thereto. The extension part 142 may be bent to extended downwardly from the edge of the planar part 141. The extension part 142 may further include bent parts 142a and 142b that are sequentially bent outwardly and downwardly to account for (or to overcome) a height difference between an outer end 142x of the extension part 142 and the planar part 141. As another example, the extension part 142 may extend outwardly to be inclined without a separate additional bent part. The extension part 142 of the negative electrode collector plate 140 may be seated on the beading part 113 (e.g., on the lower inner surface 113a of the beading part 113) after the beading part 113 of the cylindrical can 110 is formed. Here, the cylindrical can 110 may be in a state in which the opened lower portion faces upwardly. For example, referring to FIG. 4A, when the opened lower portion of the cylindrical can 110 faces upwardly, the negative electrode collector plate 140 is seated and welded to the beading part 113 of the cylindrical can 110 and the electrode assembly 120.

The extension part 142 may be in contact with the lower inner surface 113a of the beading part 113. Here, the inner surface 113a may be an inner surface of the cylindrical can 110. The extension part 142 may be welded in a state in which the outer end 142x is in contact with the inner surface 113a of the beading part 113 to be fixed and electrically connected to the cylindrical can 110. For example, a first welding part W1 may be formed between the extension part 142 of the negative electrode collector plate 140 and the beading part 113 of the cylindrical can 110 by welding. The first welding part W1 may be welded from a surface of the extension part 142 of the negative electrode collector plate 140 toward the beading part 113. In one embodiment, the first welding part W1 may be provided to correspond to a shape of the extension part 142 seated on the beading part 113. For example, when four extension parts 142 are spaced apart from each other along the edge of the planar part 141, the first welding part W1 may be selectively provided on areas where the beading part 113 is on (or contacts) the extension parts 142. For example, as illustrated in FIG. 3, the first welding part W1 may be provided from the surface of the extension part 142 in a dot shape, a straight line shape, or an arc shape, as some examples.

As the size of the first welding part W1 increases, a bonding area between the negative electrode collector plate 140 and the cylindrical can 110 increases and contact resistance therebetween may not increase (or may be reduced) but processing time may increase. The shape of the first welding part W1 for electrically connecting the negative electrode collector plate 140 to the cylindrical can 110 may be variously changed or modified. Based on this connection, the negative electrode collector plate 140 acts as a current flow path between the negative electrode plate 122 of the electrode assembly 120 and the cylindrical can 110.

The terminal 150 may be inserted into the terminal hole 111a in the top surface portion 111 of the cylindrical can 110 and electrically connected to the positive electrode collector plate 130. The terminal 150 may be made of the same or similar material as each of the positive electrode collector plate 130 and the positive electrode plate 121. A diameter of a portion of the terminal 150 exposed at an upper portion of the cylindrical can 110 and a diameter thereof disposed inside the cylindrical can 110 may be greater than that of a portion disposed in the terminal hole 111a. For convenience, a portion of the terminal 150 that is exposed at the upper portion of the cylindrical can 110 refers to an upper end of the terminal 150, and a portion of the terminal 150 that is disposed inside the cylindrical can 110 to face the electrode assembly 120 refers to a lower end of the terminal 150. The terminal 150 may be coupled to the terminal hole 111a in the top surface portion 111 of the cylindrical can 110 from top to bottom, and then, the lower end may be compressed and deformed (e.g., compression molded) through a processing method, such as pressing or spinning, to be in close contact with a bottom surface of the top surface portion 111. The gasket 111b may be interposed between the terminal 150 and the terminal hole 111a to electrically insulate the terminal 150 from the cylindrical can 110 and to seal the terminal 150 and the cylindrical can 110. The terminal 150 may be electrically connected to the positive electrode plate 121 of the electrode assembly 120 via the positive electrode collector plate 130.

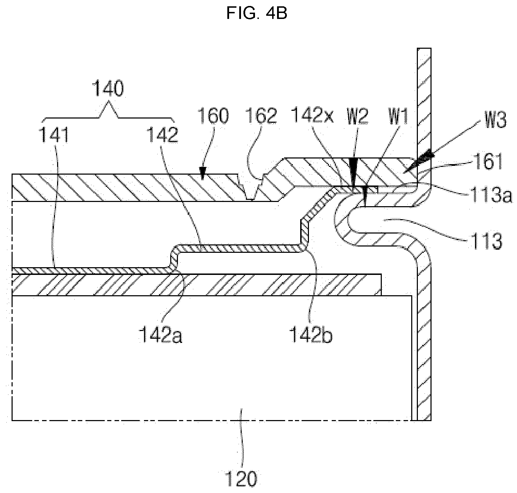

The cap plate 160 may be a circular metal plate and may be coupled to the lower end of the cylindrical can 110. The cap plate 160 may be fixed by forming the crimping part 114 at the lower end of the cylindrical can 110 in the state in which the edge of the cap plate 160 is seated on the lower surface 113a of the beading part 113 of the cylindrical can 110. The cap plate 160 of the cylindrical can 110 may be seated on the beading part 113 in the state in which the opened lower portion faces the upper side. For example, referring to FIG. 4B, when the opened lower portion of the cylindrical can 110 faces upwardly, the cap plate 160 may be seated on and welded to the beading part 113 of the cylindrical can 110 and the negative electrode collector plate 140. For example, the cap plate 160 may be seated on the negative electrode collector plate 140, which is welded to the beading part 113 of the cylindrical can 110. Here, the outer end 142x of the negative electrode collector plate 140 may be interposed between the cap plate 160 and the beading part 113 of the cylindrical can 110. In addition, an outer end 161 of the cap plate 160 may be in contact with the inner surface of the cylindrical can 110 that extends downwardly from the beading part 113. The cap plate 160 may be fixed and electrically connected to each of the negative electrode collector plate 140 and the cylindrical can 110 by welding. For example, the cap plate 160 may have the same polarity as the negative electrode collector plate 140. In some embodiments, the cap plate 160 may have a circular plate shape.

A second welding part W2 may be formed between the cap plate 160 and the negative electrode collector plate 140 by welding, and a third welding part W3 may be formed between the cap plate 160 and the cylindrical can 110 by welding.

The second welding part W2 may be provided by welding from the surface of the cap plate 160 toward the extension part 142 of the negative electrode collector plate 140. The second welding part W2 may correspond to the shape of the extension part 142 of the negative electrode collector plate 140 seated on the beading part 113. For example, the second welding part W2 may be a dot shape, a line shape, or an arc shape, as some examples, and may be similar to the shape of the first welding part W1. However, the second welding part W2 may be provided so as not to overlap (e.g., to be offset from) the first welding part W1 on a plane. As the second welding part W2 increases in size, the contact resistance between the negative electrode collector plate 140 and the cap plate 160 may be reduced (or may be prevented from increasing), but the processing time may increase. The shape of the second welding part W2 for electrically connecting the cap plate 160 to the negative electrode collector plate 140 may be variously changed.

In addition, the third welding part W3 may be provided by welding from the outer surface of the cylindrical can 110 toward the outer end 161 of the cap plate 160. The third welding part W3 may be provided in a ring shape along the outer surface of the cylindrical can 110 to integrally couple it to the outer end 161 of the cap plate 160. The third welding part W3 may be provided to be substantially parallel to the beading part 113. The outer end 161 of the cap plate 160 may be electrically and mechanically coupled to the cylindrical can 110 by the third welding part W3. In addition, the third welding part W3 may seal a gap between the cap plate 160 and the cylindrical can 110.

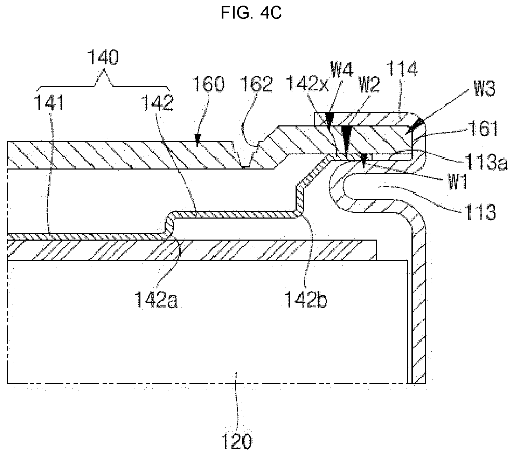

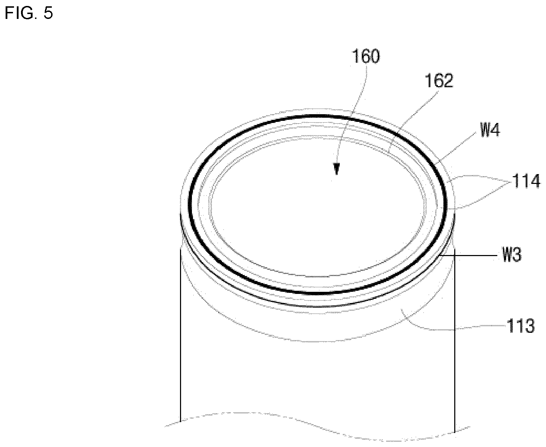

After the second welding part W2 and the third welding part W3 are provided, the crimping part 114 of the cylindrical can 110 may be bent toward the inside of (e.g., toward the center of) the cap plate 160, and then, the cap plate 160 and the crimping part 114 may be welded to each other to be electrically and mechanically coupled to each other. For example, referring to FIG. 4C, when the opened lower portion of the cylindrical can 110 faces upwardly, the end of the cylindrical can 110 may be bent toward the cap plate 160 to provide the crimping part 114. Thereafter, the cap plate 160 and the crimping part 114 may be welded to each other to form a fourth welding part W4. The crimping part 114 may be on the same plane as the bottom surface of the cap plate 160. The fourth welding part W4 may be provided by welding from the surface of the crimping part 114 toward the cap plate 160. In some embodiments, the outer end 161 of the cap plate 160 may be interposed between the beading part 113 and the crimping part 114 of the cylindrical can 110. In other embodiments, the extension part 142 of the negative electrode collector plate 140 may be disposed between the beading part 113 and the outer end 161 of the cap plate 160. The fourth welding part W4 may be spaced a distance (e.g., a predetermined distance) from the end of the crimping part 114 and may be welded entirely along the crimping part 114 to be provided in the ring shape (see, e.g., FIG. 5). In other embodiments, the fourth welding part W4 may be provided in the ring shape by being welded entirely along the end of the crimping part 114. The crimping part 114 and the outer end 161 of the cap plate 160 may be electrically and mechanically coupled to each other by the fourth welding part W4. Also, the gap between the cap plate 160 and the cylindrical can 110 may be sealed (or further sealed) by the fourth welding part W4. For example, the cap plate 160 and the cylindrical can 110 may be electrically coupled and sealed to each other at the same time by the third welding part W3 and the fourth welding part W4 without a separate sealing member, such as a gasket. The first welding part W1, the second welding part W2, the third welding part W3, and the fourth welding part W4 may be provided by laser welding, but the present disclosure is not limited thereto.

In addition, a notch 162 is provided in the cap plate 160 such that the cap plate 160 may burst at the notch 162 at a set pressure. Thus, the cap plate 160 may prevent the cylindrical secondary battery 100 from exploding when an internal pressure of the cylindrical can 110 exceeds a breaking (or bursting or rupture) pressure. For example, when excessive internal pressure is generated inside the cylindrical can 110, the notch 162 breaks, and thus, the excessive internal pressure may be discharged. The notch 162 in the cap plate 160 may be spaced apart from a central portion and may be provided in a ring shape on the plane. As another example, the notch 162 may be provided in a plurality of patterns, but the present disclosure does not limit the shape of the notch 162.

Because both the negative electrode and the positive electrode are provided at the top surface of the cylindrical secondary battery 100, when electrically connecting the plurality of cylindrical secondary batteries 100 to each other via a bus bar, only the top surface needs to be connected (or needs to be accessible), and thus, the bus bar connection structure may be simplified. In addition, because the cylindrical secondary battery 100 is sealed between the cap plate 160 and the cylindrical can 110 by welding, a separate gasket for sealing may be omitted to reduce the overall height of the cylindrical secondary battery 100.

In the cylindrical secondary battery according to embodiments of the present disclosure, because both the positive electrode and the negative electrode are provided (or are accessible) at the top end thereof, when the plurality of secondary batteries are electrically connected to each other via bus bars, the secondary batteries may be connected to each other at only one surface, thereby simplifying a connection structure of the bus bar.

In the cylindrical secondary battery according to embodiments of the present disclosure, because the cap plate and the cylindrical can are sealed to each other by the welding, a separate gasket for sealing may be omitted, thereby reducing the overall height of the battery and increasing a capacity to height ratio.

The above-mentioned embodiments are merely examples of the present disclosure, and thus, the present disclosure is not limited to the foregoing embodiments. Also, it will be understood by those of ordinary skill in the art that various changes in form and details may be made therein without departing from the scope of the present disclosure as defined by the following claims and their equivalents.

## Claims

1. A cylindrical secondary battery comprising:
an electrode assembly comprising a positive electrode plate, a separator, and a negative electrode plate;
a cylindrical can accommodating the electrode assembly, a lower end of the cylindrical can being electrically connected to the negative electrode plate;
a terminal passing through a top surface of the cylindrical can and electrically connected to the positive electrode plate; and
a cap plate coupled at the lower end of the cylindrical can, the cap plate being sealed to the lower end of the cylindrical can by welding.

2. The cylindrical secondary battery of claim 1, wherein the cylindrical can has a top surface portion and a side surface portion extending downwardly from an edge of the top surface portion, and
wherein the top surface portion has a flat plate shape and a terminal hole passing through a central portion thereof.

3. The cylindrical secondary battery of claim 2, wherein the terminal is coupled at the terminal hole and has an upper end exposed to the outside, and
wherein a gasket is interposed between the cap plate and the terminal.

4. The cylindrical secondary battery of claim 3, further comprising a plate-shaped positive electrode collector plate in the cylindrical can and fixed and electrically connected by welding to the positive electrode plate exposed at an upper end of the electrode assembly,
wherein a top surface of the positive electrode collector plate is welded to a bottom surface of the terminal.

5. The cylindrical secondary battery of any one of claims 1 to 4, wherein the cylindrical can comprises:
a beading part recessed into the cylindrical can at an upper portion thereof with respect to the cap plate; and
a crimping part bent inwardly at a lower portion thereof with respect to the cap plate.

6. The cylindrical secondary battery of claim 5, further comprising a negative electrode collector plate in the cylindrical can, the negative electrode collector plate comprising:
a planar part having a plate shape and being welded to a bottom surface of the electrode assembly; and
an extension part extending downwardly from an edge of the planar part and being welded to the beading part of the cylindrical can.

7. The cylindrical secondary battery of claim 6, further comprising a first welding part between an outer end of the extension part and the beading part,
wherein the outer end of the extension part is at a lower portion of the beading part.

8. The cylindrical secondary battery of claim 6, wherein an outer end of the cap plate is between the beading part and the crimping part and is welded to the cylindrical can and the negative electrode collector plate.

9. The cylindrical secondary battery of claim 8, further comprising a second welding part electrically and mechanically coupling a surface of the cap plate and the extension part of the negative electrode collector plate.

10. The cylindrical secondary battery of claim 8 or claim 9, further comprising:
a third welding part electrically and mechanically coupling an outer surface of the beading part of the cylindrical can and the outer end of the cap plate; and
a fourth welding part electrically and mechanically coupling a surface of the crimping part of the cylindrical can and an outer surface of the cap plate.

11. The cylindrical secondary battery of claim 10, wherein the third welding part has a ring shape parallel to the beading part of the cylindrical can and seals a gap between the cylindrical can and the cap plate.

12. The cylindrical secondary battery of claim 10 or claim 11, wherein the fourth welding part has a ring shape along the crimping part of the cylindrical can and seals a gap between the cylindrical can and the cap plate.
